# EUROPÄISCHE PATENTSCHRIFT

(11) **EP 2 764 574 B1**
(45) Veröffentlichungstag und Bekanntmachung des Hinweises auf die Patenterteilung: **03.06.2015**
(21) Anmeldenummer: 12778977.4
(22) Anmeldetag: 04.10.2012
(51) Int. Cl.: H01Q 1/42

(54) **KRAFTEINLEITUNGSRING FÜR GESCHÄUMTE RADOME**
FORCE APPLICATION RING FOR FOAMED RADOMES
BAGUE D'APPLICATION DE FORCES POUR RADÔMES EXPANSÉS

(30) Priorität: 04.10.2011 DE 102011083951
(43) Veröffentlichungstag der Anmeldung: 13.08.2014
(73) Patentinhaber: Rohde & Schwarz GmbH & Co. KG, 81671 München (DE)
(72) Erfinder: BERGER, Anton, 83727 Schliersee (DE); NEUMANN, Günter, 85622 Feldkirchen (DE)
(74) Vertreter: Körfer, Thomas
(86) Internationale Anmeldenummer: PCT/EP2012/069569
(87) Internationale Veröffentlichungsnummer: WO 2013/050440

(56) Entgegenhaltungen:
- EP-A1- 1 478 050
- EP-A1- 1 667 277
- DE-T2- 68 910 861
- GB-A- 2 197 704
- JP-A- 9 236 653
- US-A1- 2002 005 815
- US-A1- 2007 139 288

## Beschreibung

Die Erfindung betrifft ein Radom mit einem Krafteinleitungselement, insbesondere einen Krafteinleitungsring, zur Fixierung von Radomen, insbesondere geschäumten Radomen.

Bestimmte Antennentypen, insbesondere solche, die auf Leiterplatten gedruckt sind (engl. patch antennas) müssen, um einen fehlerfreien Betrieb im Freien gewährleisten zu können, mit einer Schutzhülle abgedeckt werden. Diese Schutzhülle, auch Radom genannt, schütz das Antennenelement vor Witterungseinflüssen und Tieren. Das Radom besteht dabei aus einem Kunststoff, der die elektromagnetischen Wellen der Antennenelemente in dem zu betreibenden Frequenzbereich möglichst wenig dämpft. Bevorzugt weist das Radom z.B. die Form eines Hohlzylinders oder Elypsoids, der an einem Ende kreisrund abgeschlossen ist, auf. Das Antennenelement wird durch die Öffnung in das Radom eingeführt, wobei der Antennenflansch mit dem Radom mehr oder weniger fest verbunden wird.

Aus der US 2005/0030250 A1 ist eine stabförmige Antennenanordnung bekannt, die durch ein zylinderförmiges Radom gegen äußere Einflüsse geschützt wird. Das Radom weist eine relativ dünne Außenwand auf, die in einer kreisförmig verlaufenden Nut des Antennenflansches gesteckt wird. Nachteilig an der US 2005/0030250 A1 ist, dass über diese Steckverbindung kein mechanisch stabiler und wasserdichter Kontakt zwischen dem Radom und dem Antennenflansch hergestellt werden kann.

EP 1 478 050 A1 beschreibt ein Radom gemäß dem Oberbegriff von Anspruch 1.

Es ist daher die Aufgabe des erfindungsgemäßen Radoms mit Krafteinleitungselement eine Lösung zu schaffen, um ein Radom möglichst einfach und mechanisch stabil mit einem Antennenflansch verbinden zu können, und um dieses Radom möglichst einfach herstellen zu können.

Die Aufgabe wird bezüglich des Radoms durch die Merkmale des Anspruchs 1 gelöst. In den jeweiligen Unteransprüchen sind vorteilhafte Weiterbildungen des erfindungsgemäßen Krafteinleitungselements angegeben.

Das Krafteinleitungselement dient zur Fixierung von Radomen und weist einen ringförmigen Flanschbereich auf, wobei das Krafteinleitungselement zumindest einen Fixierungsbereich aufweist, der sich von dem Flanschbereich in Richtung auf das zu fixierende Radom erstreckt und dessen Außenflächen von dem Radom formschlüssig umgeben sind.

Das Krafteinleitungselement weist zur Fixierung von Radomen zumindest einen Fixierungsbereich auf, der sich von dem Flanschbereich in Richtung auf das zu fixierende Radom erstreckt und dessen Außenflächen von dem Radom formschlüssig umgeben sind. Dadurch, dass der Fixierbereich von dem ringförmigen Flanschbereich absteht, entstehen Außenflächen, an denen das Radom formschlüssig anliegen kann. Eine derartige mechanische Verbindung kann direkt bei der Herstellung des Radoms erfolgen, sodass im Anschluss daran ein Antennenflansch direkt mit dem ringförmigen Flanschbereich verbunden werden kann.

Weiterhin ist es besonders vorteilhaft, wenn es sich bei dem Radom des Krafteinleitungselements um ein Schaumradom handelt und wenn der Fixierungsbereich formschlüssig von dem Schaumradom umgeben ist und/oder wenn sich der Fixierungsbereich nach oben hin in seinem Durchmesser verjüngt und/oder wenn der Fixierungsbereich ringförmig ausgebildet ist. Für den Fall, dass es sich bei dem Radom um ein Schaumradom handelt, welches durch Aufschäumen eines Kunststoffs herstellbar ist, kann das Krafteinleitungselement innerhalb des Herstellungsprozesses fest mit dem Schaumradom verbunden werden. In diesem Fall ist der Fixierungsbereich formschlüssig von dem Schaumradom umgegeben, wobei die mechanische Stabilität noch dadurch erhöht werden kann, wenn der Fixierungsbereich ringförmig ausgebildet ist. In diesem Fall nimmt die Größe der Außenflächen, die von dem Radom formschlüssig umgeben sind, deutlich zu, sodass das Krafteinleitungselement mechanisch stabil mit dem Radom verbunden ist.

Außerdem besteht bei dem Krafteinleitungselement der Vorteil, dass der Fixierungsbereich des Krafteinleitungselements einen Hinterschnitt in seiner Geometrie aufweist und dieser Hinterschnitt in dem Fixierungsbereich des Krafteinleitungselements durch zumindest eine Öffnung gebildet ist, die von dem Radom, insbesondere Schaumradom, ausgefüllt ist. Dieser Hinterschnitt, der durch zumindest eine Öffnung gebildet ist, verhindert dadurch, dass das Schaumradom von dem Krafteinleitungselement abziehbar und gegenüber diesem verdrehbar ist.

Zusätzlich besteht bei dem Krafteinleitungselement ein Vorteil, wenn die zumindest eine Öffnung in dem Fixierungsbereich des Krafteinleitungselements beide Außenflächen des Fixierungsbereichs tunnelartig miteinander verbindet. In diesem Fall ist das formschlüssig anliegende Radom, insbesondere Schaumradom auf vier Seiten von dem Fixierungsbereich des Krafteinleitungselements umgeben. Ein Abziehen oder Verdrehen des Schaumradoms von dem Krafteinleitungselement ist daher nicht mehr möglich.

Ferner besteht bei dem Krafteinleitungselement ein Vorteil, wenn eine Breite der zumindest einen Öffnung in dem Fixierungsbereich des Krafteinleitungselements größer ist als eine Höhe der zumindest einen Öffnung. Dadurch wird erreicht, dass der Fixierungsbereich nur insoweit in das Radom, insbesondere Schaumradom, ragen muss, dass eine mechanisch stabile Verbindung entsteht. Eine ausreichende Stabilität gegenüber einer axialen Abziehbewegung oder einer radialen Drehbewegung kann durch Wahl einer höheren Breite wirkungsvoll entgegen getreten werden.

Weiterhin besteht bei dem Krafteinleitungselement ein Vorteil, wenn der Fixierungsbereich an einer oder beiden Außenflächen ein Ringprofil aufweist, wobei das Radom, insbesondere Schaumradom, formschlüssig in dem Ringprofil anliegt und dadurch gegen eine Abziehbewegung gesichert ist. Zusätzlich besteht bei dem Krafteinleitungselement ein Vorteil, wenn das Ringprofil durch voneinander beabstandete Nuten gebildet ist. Diese Nuten können besonders einfach in das Krafteinleitungselement gefräst werden oder in einer Gussform für das Krafteinleitungselement angebracht werden. Durch Wahl einer unterschiedlichen Tiefe dieser voneinander beabstandeten Nuten kann die mechanische Widerstandsfähigkeit gegen eine axiale Abziehbewegung und einer radialen Drehbewegung weiter erhöht werden. Außerdem besteht bei dem Krafteinleitungselement ein Vorteil, wenn eine oder beide Außenflächen des Fixierungsbereichs Einbuchtungen und/oder Einkerbungen aufweisen, die von dem Radom, insbesondere Schaumradom, formschlüssig gefüllt sind. Durch die mehr oder weniger großen Einbuchtungen und/oder Einkerbungen kann das Abziehen des Schaumradoms von dem Krafteinleitungselement wirkungsvoll verhindert werden.

Zusätzlich besteht bei dem Krafteinleitungselement ein Vorteil, wenn eine oder beide Außenflächen des Fixierungsbereichs ein wellenförmiges Profil ausweisen, wobei die Wellen auf einer oder beiden Außenflächen eine positive und/oder negative Steigung haben, wobei das wellenförmige Profil formschlüssig von dem Radom, insbesondere Schaumradom, umgeben ist. Ein derartig wellenförmiges Profil verstärkt ebenfalls die mechanische Widerstandsfähigkeit gegenüber einer axialen Abziehbewegung, sodass das Schaumradom mechanisch stabil mit dem Krafteinleitungselement verbunden ist.

Schließlich besteht bei dem Krafteinleitungselement außerdem ein Vorteil, wenn das Krafteinleitungselement mit dem Fixierungsbereich und dem Flanschbereich einteilig ausgebildet ist. Dies erleichtert einerseits die Montage und die Fertigung des Radoms, insbesondere Schaumradoms, und führt andererseits zu einer höheren mechanischen Stabilität, die den unterschiedlichen Einsatzbereichen von Schaumradomen Rechnung trägt.

Weiterhin ist es bei dem Krafteinleitungselement besonders vorteilhaft, wenn die mit dem Fixierungsbereich abgewandte Seite des Flanschbereichs ein oder mehrere Bohrungen aufweist und/oder wenn sich die eine oder mehreren Bohrungen von dem Flanschbereich in den Fixierungsbereich erstrecken und wenn es sich bei den einen oder mehreren Bohrungen um Gewindebohrungen handelt und/oder wenn in den einen oder mehreren Bohrungen ein separates Gewinde eingedreht ist. Mittels dieser Bohrungen kann der Flanschbereich besonders einfach mit einem weiteren Bauteil, beispielsweise mit einem Antennenflansch, verbunden werden. Dadurch, dass in die Bohrungen ein separates Gewinde eingedreht werden kann, können auch weichere Materialien zur Herstellung des Krafteinleitungselements verwendet werden, ohne das die Gewindebohrungen bei einer Vielzahl von Montagevorgängen abgenutzt werden würden.

Zusätzlich besteht bei dem Krafteinleitungselement ein Vorteil, wenn die den Fixierungsbereich abgewandte Seite des Flanschbereichs plan ausgebildet ist. Diese plane Ausbildung erleichtert den Anschluss des Flanschbereichs an weitere Komponenten, wie zum Beispiel einen Antennenflansch und erlaubt, dass diese Verbindung mittels eines Dichtrings oder einer Dichtmasse wasserdicht abgedichtet werden kann.

Außerdem besteht bei dem Krafteinleitungselement ein Vorteil, wenn der Fixierungsbereich eine abgerundete V-Form oder eine abgerundete T-Form oder eine abgerundete H-Form aufweist, wobei die Öffnung der V-Form oder eine Unterseite der T-Form oder H-Form sich an den Flanschbereich anschließt. Auf diese Art und Weise wird erreicht, dass das Radom, insbesondere Schaumradom, mechanisch stabil mit dem Krafteinleitungselement verbunden ist.

Auch besteht bei dem Krafteinleitungselement ein Vorteil, wenn das Radom aus Polyurethan besteht und wenn das Krafteinleitungselement aus Aluminium oder aus Edelstahl oder aus Kunststoff besteht. Für den Fall, dass das Radom aus Polyurethan besteht, kann dieses sehr einfach aufgeschäumt werden, wobei das Krafteinleitungselement sich direkt während des Aufschäumprozesses mit dem Schaumradom verbindet. Auf diese Art und Weise können die gewünschten Einbuchtungen, Einkerbungen, Hinterschnitte, oder Nuten formschlüssig von dem Schaumradom umgeben werden, wobei gleichzeitig ebenfalls sicher gestellt ist, dass eine wasserdichte Verbindung zwischen dem Schaumradom und dem Krafteinleitungselement hergestellt ist.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: ein Beispiel eines Radoms zum witterungsbedingten Schutz von Antennen mit dem erfindungsgemäßen Krafteinleitungselement, an das ein Antennenflansch angeschraubt ist;
- Fig. 2: einen Querschnitt durch ein erfindungsgemäßes Radom und ein Ausführungsbeispiel eines dazugehörigen Krafteinleitungselement;
- Fig. 3: eine räumliche Ansicht eines Ausführungsbeispiels des ringförmigen Krafteinleitungselements mit einem Fixierungsbereich und einem Flanschbereich;
- Fig. 4: eine weitere räumliche Ansicht des Ausführungsbeispiels der ringförmigen Krafteinleitungselement mit einem Flanschbereich und einem Fixierungsbereich;
- Fig. 5: einen Querschnitt durch das Ausführungsbeispiel des Krafteinleitungselements mit einem Fixierungsbereich und einem Flanschbereich;
- Fig. 6A: ein erstes Ausführungsbeispiel eines Querschnitts durch das Krafteinleitungselement mit einem Fixierungsbereich und einem Flanschbereich;
- Fig. 6B: ein zweites Ausführungsbeispiel eines Querschnitts durch das Krafteinleitungselement mit einem Fixierungsbereich und einem Flanschbereich; und
- Fig. 6C: ein drittes Ausführungsbeispiel eines Querschnitts durch das Krafteinleitungselement mit einem Fixierungsbereich und einem Flanschbereich.

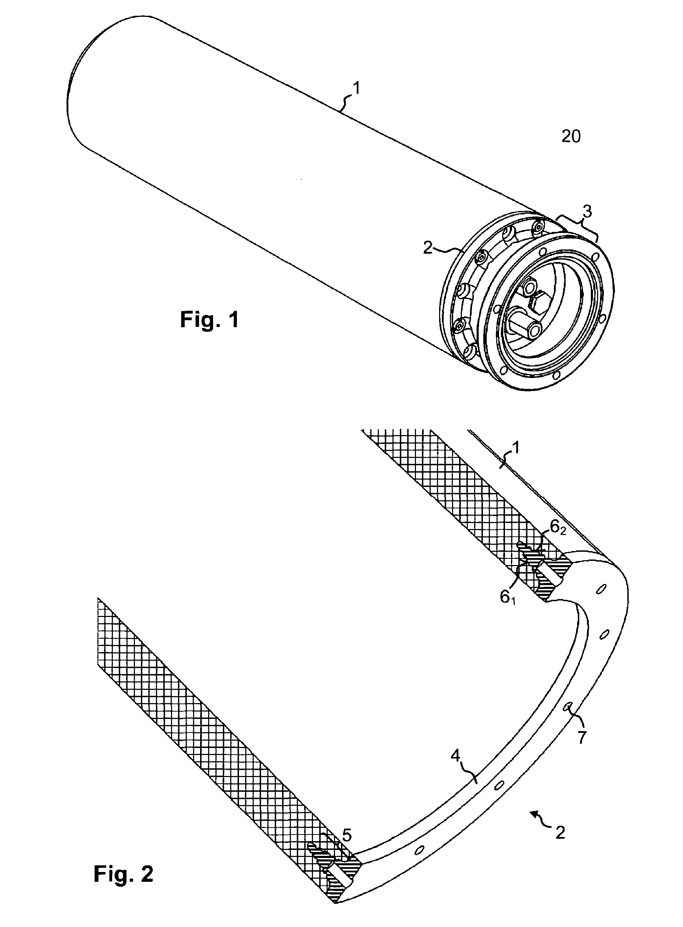

Fig. 1 zeigt ein Radom 1, insbesondere ein Schaumradom 1, zum witterungsbedingten Schutz 1 von Antennen. Das Schaumradom 1 ist hier als Hohlzylinder ausgebildet, wobei das eine Ende, in diesem Fall, das obere Ende, verschlossen ist. Die Wände des Schaumradoms haben bevorzugt eine nennenswerte Stärke von z.B. einigen Millimetern. Das Schaumradom 1 ist zur Fixierung weiterhin mit dem Krafteinleitungselement 2 verbunden. Das Krafteinleitungselement 2 weist eine ringförmige Ausbildung auf. Diese Verbindung ist, wie später noch erläutert wird, mechanisch stabil und vorzugsweise wasserdicht. Mit dem Krafteinleitungselement 2 ist weiterhin noch ein Antennenflansch 3 verbunden. Mit diesem Antennenflansch 3 ist eine Halterung für eine Vielzahl von Antennenelementen, die in dem Ausführungsbeispiel aus Fig. 1 nicht sichtbar sind, verbunden. Diese Antennenelemente befinden sich innerhalb des Schaumradoms 1 und werden von diesem vor Witterung und Tieren geschützt. Der Antennenflansch 3 ist mit dem Krafteinleitungselement 2 durch zumindest eine Schraubverbindung mechanisch stabil und formschlüssig verbunden. Der Antennenflansch 3 weist weitere Schraubverbindungen auf, mit denen er zum Beispiel an Dächern oder Booten befestigt werden kann.

Fig. 2 zeigt einen Querschnitt durch ein Radom 1, insbesondere ein Schaumradom 1, und dem dazugehörigen Krafteinleitungselement 2. Gut zu erkennen ist, dass das Krafteinleitungselement 2 formschlüssig von dem Schaumradom 1 umgeben ist. Genauer gesagt besteht das Krafteinleitungselement 2 aus einem ringförmigen Flanschbereich 4 und einem Fixierungsbereich 5. Das Krafteinleitungselement 2 ist allerdings einteilig ausgebildet. Das bedeutet, dass der Fixierungsbereich 5 untrennbar mit dem Flanschbereich 4 verbunden ist. Der Fixierungsbereich 5 erstreckt sich von dem Flanschbereich 4 in Richtung auf das zu fixierende Schaumradom 1, wobei dessen Außenflächen 6₁ und 6₂ von dem Schaumradom 1 vollständig formschlüssig umgeben sind. Der Begriff "vollständig formschlüssig umgeben" ist hier insbesondere derart aufzufassen, dass im Zuge des Herstellungsverfahrens auftretende Luftblasen, die dafür sorgen, dass möglicherweise noch eine zusätzliche partielle Luftschicht zwischen den Außenflächen 6₁ und 6₂ und dem Schaumradom 1 vorhanden ist, die Formschlüssigkeit nicht ausschließen. Gut zu erkennen ist in Fig. 2, dass der Fixierungsbereich 5 von dem Flanschbereich 4 absteht.

Der Flanschbereich 4 umfasst außerdem verschiedene Bohrungen 7. Diese Bohrungen 7 gehen vom Flanschbereich 4 zumindest teilweise in den Fixierungsbereich 5 über. Für den Fall, dass der Flanschbereich 4 dicker ist, ist es ausreichend, wenn sich die Bohrungen 7 einzig in dem Flanschbereich 4 erstrecken. Bei den Bohrungen 7 handelt es sich im Ausführungsbeispiel um Gewindebohrungen. Es ist allerdings auch möglich, dass ein zusätzliches Gewinde in die Bohrungen 7 hinein gedreht wird. Dies ist insbesondere dann sinnvoll, wenn das Krafteinleitungselement 2 aus Metall wie z.B. Aluminium oder Kunststoff besteht, sodass durch ein zusätzliches Edelstahlgewinde das Krafteinleitungselement 2 mehrfach mit einem Antennenflansch 3 verbunden werden kann. Für den Fall, dass das Krafteinleitungselement beispielsweise aus Edelstahl gefertigt ist, ist kein zusätzliches Schraubgewinde notwendig, weil ein solches Gewinde mehrere Schraubverbindungs- und Lösevorgänge problemlos übersteht.

Das Radom 1 besteht vorzugsweise aus Polyurethan, welches in einem stark exothermen Prozess entsteht. Um das Krafteinleitungselement 2 formschlüssig mit dem Schaumradom 1 zu verbinden, wird das Krafteinleitungselement 2 in eine Form eingespannt. Diese Form ist ebenfalls als Hohlzylinder ausgebildet, wobei das Polyurethan in einer Mischpistole zusammen gemischt wird und in diese Form eingespritzt wird. Nach dem Mischprozess der Einzelverbindungen entsteht daraus das Polyurethan, welches das Schaumradom 1 bildet und dieses formschlüssig mit dem Krafteinleitungselement 2 verbindet. Dabei verbindet sich das Schaumradom 2 vorzugsweise mit dem Fixierungsbereich 5, weil die entsprechende Spritzform keine Verbindung des Schaumradoms 1 mit dem Flanschbereich 4 zulässt. Nachdem das Schaumradom 1 abgekühlt ist und sich verfestigt hat, besteht eine wasserdichte und formschlüssige Verbindung zwischen dem Schaumradom 1 und dem Krafteinleitungselement 2. Diese formschlüssige und wasserdichte Verbindung ist außerdem mechanisch sehr stabil.

Gut zu erkennen ist in Fig. 2, das sich der Fixierungsbereich 5 nach oben hin, also in Richtung des Schaumradoms 1, in seinem Durchmesser verjüngt. In dem Ausführungsbeispiel aus Fig. 2 ist der Fixierungsbereich 5 außerdem ringförmig ausgebildet. Es ist allerdings auch möglich, dass der Fixierungsbereich 5 keine durchgehende ringförmige Struktur aufweist, sondern zum Beispiel durch einzelne voneinander beabstandete Zacken gebildet ist. Der dargestellte Fixierungsbereich 5 weist in seinen Außenflächen 6₁,6₂ Einkerbungen 61 und/oder Einbuchtungen 60 auf. Diese Einkerbungen 61 und/oder Einbuchtungen 60 sind durch das Schaumradom 1 vollständig gefüllt. Das Schaumradom 1 liegt in diesen Einkerbungen 61 und/oder Einbuchtungen 60 formschlüssig an.

Es ist auch möglich, dass anstatt beiden Außenflächen 6₁, 6₂ nur eine der beiden Außenflächen 6₁, 6₂ des Fixierungsbereichs 5 über Einbuchtungen 60 und/oder Einkerbungen 61 verfügt, die mit dem Schaumradom 1 formschlüssig gefüllt sind. Durch diese Einbuchtungen 60 und/oder Einkerbungen 61 wird generell das Abziehen des Schaumradoms 1 vom Krafteinleitungselement 2 verhindert. Das Abziehen ist mit einer Bewegung in axialer Richtung gleichzusetzten.

Es ist auch möglich, das eine oder beide Außenflächen 6₁,6₂ des Fixierungsbereichs 5 über ein wellenförmiges Profil verfügen. Dabei können die Wellen auf einer oder beiden Außenflächen 6₁,6₂ eine positive und/oder eine negative Steigung haben. Das wellenförmige Profil ist dabei ebenfalls formschlüssig von dem Schaumradom 1 umgeben beziehungsweise die Wellentäler sind formschlüssig mit dem Schaumradom 1 gefüllt.

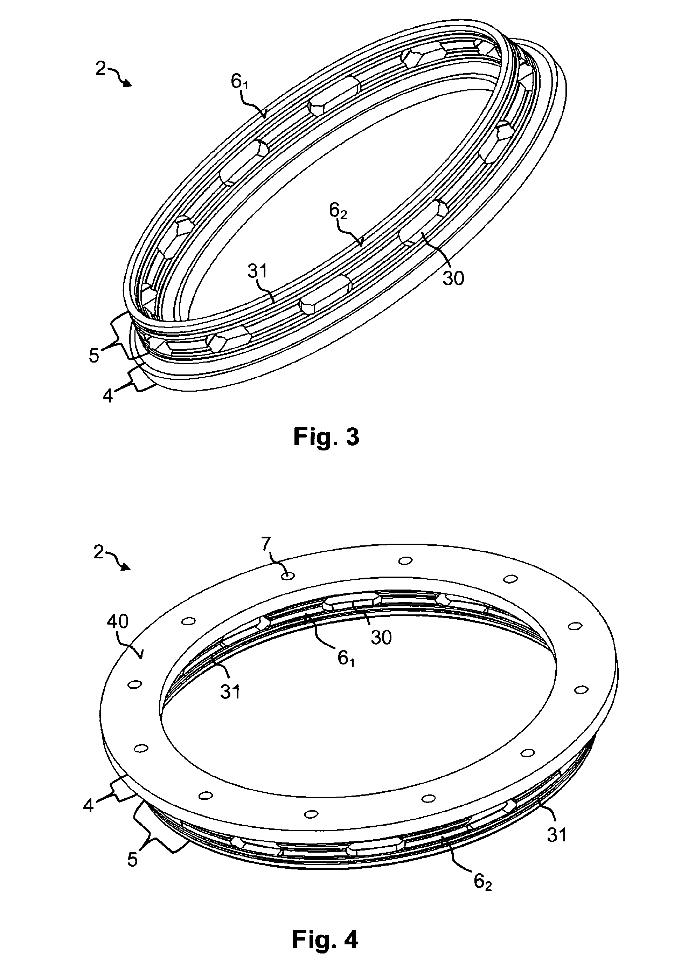

Fig. 3 zeigt eine räumliche Ansicht des ringförmigen Krafteinleitungselements 2, wobei der Fixierungsbereich 5 und der Flanschbereich 4 gut zu erkennen sind. Der Fixierungsbereich 5 ist in dem Ausführungsbeispiel aus Fig. 3 ebenfalls ringförmig ausgebildet. Ebenso sind auch andere Ausbildungsformen des Fixierungsbereichs 5, wie zum Beispiel voneinander beabstandete Zacken und/oder Spitzen denkbar. Der Fixierungsbereich 5 weist in dem Ausführungsbeispiel aus Fig. 3 eine V-förmige Struktur auf, wobei die Öffnung der V-Form (Oberseite des V), an den Flanschbereich 4 anschließt. Dadurch verjüngt sich der Durchmesser des Fixierbereichs 5 vom Flanschbereich 4 hin zum Schaumradom 1.

Gut zu erkennen ist, dass der Fixierungsbereich 5 des Krafteinleitungselements 2 einen Hinterschnitt 30 in seiner Geometrie aufweist. Dieser Hinterschnitt 30 ist in dem Ausführungsbeispiel aus Fig. 3 in den Fixierungsbereich 5 des Krafteinleitungselements 2 durch zumindest eine Öffnung 30 gebildet. Sobald der Krafteinleitungsring 2 mit dem Schaumradom 1 formschlüssig verbunden ist, ist diese Öffnung 30 von dem Schaumradom 1 ausgefüllt. Dies bewirkt, dass das Schaumradom 1 nicht mehr von dem Krafteinleitungselement 2 abgezogen werden kann. Der Hinterschnitt 30, welcher die Form einer Öffnung 30 aufweist, führt ebenfalls dazu, dass das Schaumradom 1 gegenüber dem Krafteinleitungselement 2 nicht mehr verdrehbar ist.

Gemäß dem Ausführungsbeispiel aus Fig. 3 weist das Krafteinleitungselement 2 bevorzugt mehrere solcher Hinterschnitte 30, also solche Öffnungen 30 auf, die radial beabstandet zueinander in dem Fixierungsbereich 5 angeordnet sind. In dem Ausführungsbeispiel aus Fig. 3 sind insgesamt zwölf Öffnungen 30 in dem Fixierungsbereich 5 ausgebildet. Die Öffnungen 30 sind dabei so in dem Fixierungsbereich 5 ausgebildet, dass sie einen Hohlraum schaffen, der von beiden Außenflächen 6₁, 6₂ erreicht werden kann. Dies bedeutet, dass die Öffnungen 30 in dem Fixierungsbereich 5 des Krafteinleitungselements 2 beide Außenflächen 6₁, 6₂ des Fixierungsbereich 5 tunnelartig miteinander verbinden. Dies bewirkt, dass das formschlüssig anliegende Schaumradom 1 auf vier Seiten von dem Fixierungsbereich 5 des Krafteinleitungselements 2 umgeben ist. Dadurch wird ein wirksamer Schutz gegenüber einer Bewegung in axialer Richtung und gegenüber einer Bewegung in radialer Richtung erreicht, sodass das Schaumradom 1 weder von dem Krafteinleitungselement 2 abgezogen, noch gegenüber diesem verdreht werden kann.

Bevorzugt ist die Breite in radialer Richtung der zumindest einen Öffnung 30 innerhalb des Fixierungsbereichs 5 des Krafteinleitungselements 2 größer, als die Höhe in axialer Richtung der zumindest einen Öffnung 30. Dies bewirkt, dass ein wirksamer Schutz gegen Verdrehen und Abziehen auch bei einer relativ kleinen Höhe des Fixierungsbereichs 5 erreicht wird.

Diese Öffnungen 30 können mittels eines Fräsprozesses hergestellt werden. Die Öffnungen 30 können auch in einem Gießprozess eingebracht werden.

Dargestellt ist in Fig. 3 außerdem, dass der Fixierungsbereich 5 an beiden Außenflächen 6₁, 6₂ ein Ringprofil 31 aufweist. Selbstverständlich kann dieses Ringprofil 31 auch nur an einer der beiden Außenflächen 6₁, 6₂ des Fixierungsbereichs 5 ausgebildet sein. Das Ringprofil 31 ist dabei durch voneinander beabstandete Nuten 31 gebildet. Diese Nuten 31 können durch einen Fräsprozess oder durch einen Gießprozess oder durch einen Prägeprozess hergestellt werden. Die voneinander beabstandeten Nuten 31 müssen nicht auf dem ringförmigen Fixierungsbereich 5 in vollem Umfang vorhanden sein. Die voneinander beabstandeten Nuten 31 sind durch einen Steg in ihrer Mitte voneinander getrennt, wobei die Tiefe der voneinander beabstandeten Nuten 31 variieren kann. Die voneinander beabstandeten Nuten 31 bieten dagegen Schutz, dass das Schaumradom 1 von dem Krafteinleitungselement 2 abgezogen werden kann.

Weiterhin können einzelne Nuten 31 in ihrer Tiefe variiert werden, sodass dadurch auch ein Schutz gegen Verdrehen entsteht. In diesem Fall wechselt sich die Tiefe der einzelnen Nut 31 mehrfach ab, beziehungsweise die Tiefe der einzelnen Nuten 31 wird bei einem Umlauf jeweils mehrfach geändert. Das Schaumradom 1 liegt dabei formschlüssig in dem Ringprofil 31 beziehungsweise in den einzelnen Nuten 31 an.

Fig. 4 zeigt eine weitere räumliche Ansicht des ringförmigen Krafteinleitungselements 2 mit einem Flanschbereich 4 und einem Fixierungsbereich 5. Gut dargestellt ist, dass die dem Fixierungsbereich 5 abgewandte Seite 40 des Flanschbereichs 4 mehrere Bohrungen 7 aufweist. Bei der abgewandten Seite 40 handelt es sich um die Unterseite 40 des Flanschbereichs 4. Gut zu erkennen ist, dass die dem Fixierungsbereich 5 abgewandte Seite 40, also die Unterseite des Flanschbereichs 5, plan ausgebildet ist. Diese plane Seite 40 kann als Auflagefläche für einen Antennenflansch 3 dienen, welcher mit dem Flanschbereich über die Bohrungen 7 verschraubt wird. Auf der Auflagefläche 40 kann zwischen dem Krafteinleitungselement 2 und dem Antennenflansch 3 noch ein nicht dargestellter Dichtring oder eine nicht dargestellte Dichtmasse angebracht werden. Dadurch wird erreicht, dass das Schaumradom 1 mit dem Krafteinleitungselement 2 und dem Antennenflansch 3 wasserdicht abgedichtet sind.

Weiterhin sind in Fig. 4 die Öffnungen 30 und die Nuten 31 dargestellt. Gut zu erkennen ist hier ebenfalls, dass die Nuten 31 auf beiden Außenflächen 6₁, 6₂ des sich in seinem Durchmesser verjüngenden Fixierungsbereich 5 ausgebildet sind.

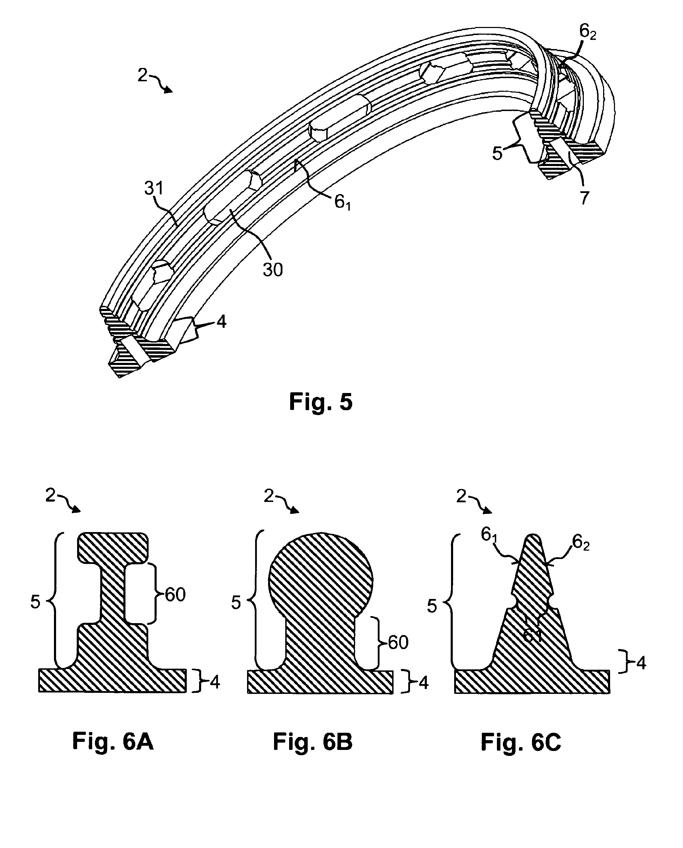

Fig. 5 zeigt einen Querschnitt durch das Krafteinleitungselement 2 mit einem Fixierungsbereich 5 und einem Flanschbereich 4. Gut zu erkennen ist, dass der Fixierungsbereich 5 in seinem ganzen Umfang ringförmig ausgebildet ist. Dies gilt ebenfalls für den Flanschbereich 4. Dargestellt ist ebenfalls, dass die Bohrungen 7 durch den Flanschbereich 4 hindurch in den Fixierungsbereich 5 ragen. Der Fixierungsbereich 5 ist V-förmig ausgebildet, wobei die Öffnung der V-Form an dem Flanschbereich 4 anliegt. Die V-Form ist dabei an den Ecken abgerundet. Die Außenflächen 6₁, 6₂ des Fixierbereichs 5 sind ebenfalls wieder mit Nuten 31 durchzogen. Der Fixierbereich 5 verfügt ebenfalls über mehrere Öffnungen 30, über die die beiden Außenflächen 6₁, 6₂ des Fixierbereichs 5 miteinander verbunden sind. In den dargestellten Öffnungen 30 kann das Schaumradom 1 formschlüssig einkreisen, sodass das Schaumradom 1 von dem Krafteinleitungselement 2 weder abgezogen noch gegenüber diesem verdreht werden kann.

Um eine gute mechanische Verbindung zwischen dem Schaumradom 1 und dem Krafteinleitungselement 2 zu erreichen, ist der Fixierungsbereich 5 in seiner Höhe größer als die Höhe des Flanschbereichs 4. Zu erkennen ist, dass in Fig. 5 der Fixierungsbereich ungefähr zweieinhalb Mal so hoch ist wie der Flanschbereich 4.

Fig. 6A zeigt eine mögliche Form eines Querschnitts durch das Krafteinleitungselement 2 mit Fixierungsbereich 5 und einem Flanschbereich 4. Zu erkennen ist, dass der Fixierungsbereich 5 höher ist als der Flanschbereich 4. Dies ist allerdings in der Zeichnungsfigur übertrieben deutlich dargestellt. Weiterhin ist außerdem gut zu erkennen, dass der Flanschbereich 4 deutlich breiter ist, als der Fixierungsbereich 5. In dem Ausführungsbeispiel in Fig. 6A ist der Flanschbereich 4 ungefähr doppelt so breit wie der Fixierungsbereich 5. Der Fixierungsbereich 5 ist in dem Ausführungsbeispiel der Fig. 6A mit einer H-Form ausgebildet. Dabei ist das H zur Seite gekippt. Sämtliche Ecken sind dabei abgerundet, um Spannungsspitzen zu vermeiden. Gut zu erkennen ist auch eine Einbuchtung 60 zwischen den Enden des Fixierungsbereichs 5. Der Fixierungsbereich 5 kann auch unproblematisch als T-Form ausgebildet sein, wobei das breitere Ende in Richtung des Schaumradoms 1 zeigt.

Fig. 6B zeigt eine weitere mögliche Form eines Querschnitts durch das Krafteinleitungselement 2 mit einem Fixierungsbereich 5 und einem Flanschbereich 4. Zu erkennen ist ebenfalls, dass der Flanschbereich 4 deutlich breiter ist, als der Fixierungsbereich 5. Dagegen ist der Fixierungsbereich 5 deutlich höher als der Flanschbereich 4. Der Fixierungsbereich 5 ist hier als Kugel ausgebildet, die über einen Steg mit dem Flanschbereich 5 verbunden ist. Der Durchmesser der Kugel ist dabei größer als die Breite des Stegs, aber kleiner als die Breite des Flanschbereichs 4. Eine Einbuchtung 60 ist dabei ebenfalls zwischen der Kugel und dem Flanschbereich 4 sichtbar. In diese Einbuchtung 60 kann das Schaumradom 1 formschlüssig anliegen. Das Schaumradom ist daher gegen eine Abziehbewegung gesichert. Dadurch ist das Schaumradom 1 mechanisch fest mit dem Krafteinleitungselement 2 verbunden.

Fig. 6C zeigt eine weitere mögliche Form eines Querschnitts durch das Krafteinleitungselement 2 mit einem Fixierungsbereich 5 und einem Flanschbereich 4. Auch in Fig. 6C ist der Flanschbereich 4 deutlich breiter als der Fixierungsbereich 5. Der Fixierungsbereich 5 ist dagegen deutlich höher als der Flanschbereich 4. Der Fixierungsbereich 5 ist V-förmig ausgebildet, wobei sämtliche Ecken abgerundet sind. Die V-förmige Spitze des Fixierungsbereichs 5 zeigt dabei in Richtung des Schaumradoms 1. Die Außenflächen 6₁, 6₂ des Fixierungsbereichs 5 weisen eine abgerundete Einkerbung 61 auf. Bei der abgerundeten Einkerbung 61 kann es sich auch um eine Ausnehmung oder um eine abgerundete Nut 31 handeln. Die Einkerbung 61 wird durch das Schaumradom 1 vollständig gefüllt. Die Einkerbung 61 bewirkt, dass das Schaumradom 1 nicht von dem Krafteinleitungselement 2 abgezogen werden kann.

Die Figuren 6A, 6B und 6C zeigen keine Bohrungen 7. Selbstverständliche können auch bei den Querschnitten aus den Figuren 6A, 6B und 6C Bohrungen verwendet werden. Weiterhin sind in den Querschnitten aus den Figuren 6A, 6B, 6C keine Öffnungen 30 dargestellt. Solche Öffnungen können aber ebenfalls problemlos in den Querschnitten ausgebildet werden. Dies gilt auch, wenn der Fixierbereich 5 aus einzelnen voneinander beabstandeten Zacken oder Spitzen gebildet ist, die den Querschnitt aus den Figuren 6A, 6B oder 6C haben können. Die Tiefe der Einbuchtungen 60 aus den Figuren 6A und 6B und die Tiefe der Einkerbung 61 aus der Fig. 6C kann ständig geändert werden, sodass bei einem ringförmigen Krafteinleitungselement 2 mit einem ringförmigen Fixierungsbereich 5 auch ein Verdrehungsschutz erreicht wird.

## Patentansprüche

1. Radom mit einem Krafteinleitungselement (2) zur Fixierung von Radomen (1), welches einen ringförmigen Flanschbereich (4) aufweist,
wobei das Krafteinleitungselement (2) zumindest einen Fixierungsbereich (5) aufweist, der sich von dem Flanschbereich (4) in Richtung auf das zu fixierende Radom (1) erstreckt und dessen Außenflächen (6₁, 6₂) von dem Radom (1) zumindest teilweise formschlüssig umgeben sind, **dadurch gekennzeichnet,**
**dass** der Fixierungsbereich (5) des Krafteinleitungselements (2) einen Hinterschnitt (30) in seiner Geometrie aufweist und,
**dass** der Hinterschnitt (30) in dem Fixierungsbereich (5) des Krafteinleitungselements (2) durch zumindest eine Öffnung (30) gebildet ist, die von dem Radom (1) ausgefüllt ist und die verhindert, dass das Radom (1) von dem Krafteinleitungselement (2) abziehbar und gegenüber diesem verdrehbar ist.

2. Radom mit einem Krafteinleitungselement nach Anspruch 1,
**dadurch gekennzeichnet,**
**dass** es sich bei dem Radom (1) um ein Schaumradom (1) handelt und dass der Fixierungsbereich (5) formschlüssig von dem Schaumradom (1) umgeben ist und/oder dass sich der Fixierungsbereich (5) nach oben hin in seinem Durchmesser verjüngt und/oder
**dass** der Fixierungsbereich (5) ringförmig ausgebildet ist.

3. Radom mit einem Krafteinleitungselement nach Anspruch 1 oder 2,
**dadurch gekennzeichnet,**
**dass** die zumindest eine Öffnung (30) in dem Fixierungsbereich (5) des Krafteinleitungselements (2) beide Außenflächen (6₁, 6₂) des Fixierungsbereichs (5) tunnelartig miteinander verbindet, sodass das darin formschlüssig anliegende Radom (1) auf vier seiten von dem Fixierungsbereich (5) des Krafteinleitungselements (22) umgeben ist.

4. Radom mit einem Krafteinleitungselement nach Anspruch 2 oder 3,
**dadurch gekennzeichnet,**
**dass** eine Breite der zumindest einen Öffnung (30) in dem Fixierungsbereich (5) des Krafteinleitungselements (2) größer ist, als eine Höhe der zumindest einen Öffnung (30).

5. Radom mit einem Krafteinleitungselement nach einem der Ansprüche 1 bis 4,
**dadurch gekennzeichnet,**
**dass** der Fixierungsbereich (5) an einer oder beiden Außenflächen (6₁, 6₂) ein Ringprofil (31) aufweist, wobei das Radom (1) formschlüssig in dem Ringprofil (31) anliegt und gegen eine Abziehbewegung gesichert ist.

6. Radom mit einem Krafteinleitungselement nach Anspruch 5,
**dadurch gekennzeichnet,**
**dass** das Ringprofil (31) durch voneinander beabstandete Nuten (31) gebildet ist und/oder
**dass** eine Tiefe jede Nut (31) mehrfach verändert ist.

7. Radom mit einem Krafteinleitungselement nach einem der Ansprüche 1 bis 6,
**dadurch gekennzeichnet,**
**dass** eine oder beide Außenflächen (6₁, 6₂) des Fixierungsbereichs (5) Einbuchtungen (60) und/oder Einkerbungen (61) aufweisen, die von dem Radom (1) formschlüssig gefüllt sind und die das Abziehen des Radoms (1) vom Krafteinleitungselement (2) verhindern.

8. Radom mit einem Krafteinleitungselement nach einem der Ansprüche 1 bis 7,
**dadurch gekennzeichnet,**
**dass** eine oder beide Außenflächen (6₁, 6₂) des Fixierungsbereichs (5) ein wellenförmiges Profil aufweisen, wobei die Wellen auf einer oder beiden Außenflächen (6₁, 6₂) eine positive und/oder eine negative Steigung haben, wobei das wellenförmige Profil formschlüssig von dem Radom (1) umgeben ist.

9. Radom mit einem Krafteinleitungselement nach einem der vorherigen Ansprüche,
**dadurch gekennzeichnet,**
**dass** das Krafteinleitungselement (2) mit dem Fixierungsbereich (5) und dem Flanschbereich (4) einteilig ausgebildet ist.

10. Radom mit einem Krafteinleitungselement nach Anspruch 9,
**dadurch gekennzeichnet,**
**dass** die dem Fixierungsbereich (5) abgewandte Seite des Flanschbereichs (4) eine oder mehrere Bohrungen (7) aufweist und/oder
**dass** sich die eine oder mehreren Bohrungen (7) von dem Flanschbereich (4) in den Fixierungsbereich (5) erstrecken.

11. Radom mit einem Krafteinleitungselement nach Anspruch 10,
**dadurch gekennzeichnet,**
**dass** es sich bei den einen oder mehreren Bohrungen (7) um Gewindebohrungen handelt und/oder dass in den einen oder mehreren Bohrungen (7) ein separates Gewinde eingedreht ist.

12. Radom mit einem Krafteinleitungselement nach einem der vorherigen Ansprüche,
**dadurch gekennzeichnet,**
**dass** die dem Fixierungsbereich (5) abgewandte Seite (40) des Flanschbereichs (4) plan ausgebildet ist.

13. Radom mit einem Krafteinleitungselement nach einem der vorherigen Ansprüche,
**dadurch gekennzeichnet,**
**dass** der Fixierungsbereich (5) eine abgerundete V-Form oder eine abgerundete T-Form oder eine abgerundete H-Form aufweist, wobei sich eine Oberseite der V-Form oder eine Unterseite der T-Form oder H-Form an den Flanschbereich (4) anschließt.

14. Radom mit einem Krafteinleitungselement nach einem der vorherigen Ansprüche,
**dadurch gekennzeichnet,**
**dass** das Radom (1) aus Polyurethan besteht und dass das Krafteinleitungselement (2) aus Metall, insbesondere Aluminium oder aus Edelstahl, oder aus Kunststoff besteht.

## Claims

1. Radome with a force application element (2) for fixing radomes (1), which exhibits a ring-shaped flange region (4),
wherein the force application element (2) exhibits at least one fixing region (5) which extends from the flange region (4) in the direction of the radome (1) to be fixed and the external surfaces (6₁, 6₂) of which are at least partially surrounded by the radome (1) in form-locking fashion,
**characterised in that** the fixing region (5) of the force application element (2) exhibits an undercut (30) in its geometry and
**in that** the undercut (30) in the fixing region (5) of the force application element (2) is formed by at least one opening (30) which is filled by the radome (1) and prevents the radome (1) being pulled away from the force application element (2) and rotated in relation to the latter.

2. Radome with a force application element according to claim 1,
**characterised in that** the radome (1) is a foamed radome (1) and **in that** the fixing region (5) is surrounded by the foamed radome (1) in form-locking fashion and/or
**in that** the fixing region (5) tapers upwards in its diameter and/or
**in that** the fixing region (5) is ring-shaped.

3. Radome with a force application element according to claim 1 or 2,
**characterised in that** the at least one opening (30) in the fixing region (5) of the force application element (2) connects both external surfaces (6₁, 6₂) of the fixing region (5) together in the manner of a tunnel so that the radome (1) bearing therein in form-locking fashion is surrounded by the fixing region (5) of the force application element (2) on four sides.

4. Radome with a force application element according to claim 2 or 3,
**characterised in that** a breadth of the at least one opening (30) in the fixing region (5) of the force application element (2) is greater than a height of the at least one opening (30).

5. Radome with a force application element according to one of claims 1 to 4,
**characterised in that** the fixing region (5) exhibits a ring profile (31) on one or both external surfaces (6₁, 6₂), wherein the radome (1) bears in the ring profile (31) in form-locking fashion and is secured against a pulling away movement.

6. Radome with a force application element according to claim 5,
**characterised in that** the ring profile (31) is formed by spaced grooves (31) and/or
**in that** a depth of each groove (31) is changed multiple times.

7. Radome with a force application element according to one of claims 1 to 6,
**characterised in that** one or both external surfaces (6₁, 6₂) of the fixing region (5) exhibit curved recesses (60) and/or indentations (61) which are filled by the radome in form-locking fashion and prevent the radome (1) being pulled away from the force application element (2).

8. Radome with a force application element according to one of claims 1 to 7,
**characterised in that** one or both external surfaces (6₁, 6₂) of the fixing region (5) exhibit a wave-shaped profile, wherein the waves on one or both external surfaces (6₁, 6₂) have a positive and/or a negative pitch, wherein the wave-shaped profile is surrounded by the radome (1) in form-locking fashion.

9. Radome with a force application element according to one of the preceding claims,
**characterised in that** the force application element (2) with the fixing region (5) and the flange region (4) is formed in one piece.

10. Radome with a force application element according to claim 9,
**characterised in that** the side of the flange region (4) facing away from the fixing region (5) exhibits one or more bores (7) and/or
**in that** the one or more bores (7) extend from the flange region (4) into the fixing region (5).

11. Radome with a force application element according to claim 10,
**characterised in that** the one or more bores (7) are threaded bores and/or
**in that** a separate thread is screwed into the one or more bores (7).

12. Radome with a force application element according to one of the preceding claims,
**characterised in that** the side (40) of the flange region (4) facing away from the fixing region (5) is plane.

13. Radome with a force application element according to one of the preceding claims,
**characterised in that** the fixing region (5) exhibits a rounded V-shape or a rounded T-shape or a rounded H-shape, wherein an upper side of the V-shape or a lower side of the T-shape or H-shape adjoins the flange region (4).

14. Radome with a force application element according to one of the preceding claims,
**characterised in that** the radome (1) is made of polyurethane and **in that** the force application element (2) is made of metal, in particular of aluminium or of stainless steel, or of plastic.

## Revendications

1. Radôme comportant un élément d'application de force (2) en vue de la fixation de radômes (1), qui présente une zone de collerette en forme de bague (4),
dans lequel l'élément d'application de force (2) présente au moins une zone de fixation (5), qui s'étend de la zone de collerette (4) en direction du radôme à fixer (1) et dont les surfaces extérieures (6₁, 6₂) sont entourées par le radôme (1) au moins partiellement par complémentarité de forme,
**caractérisé en ce que**
la zone de fixation (5) de l'élément d'application de force (2) présente une découpe arrière (30) dans sa géométrie et,
**en ce que** la découpe arrière (30) est formée dans la zone de fixation (5) de l'élément d'application de force (2) par au moins une ouverture (30), qui est remplie par le radôme (1) et qui empêche que le radôme (1) puisse être retiré de l'élément d'application de force (2) et puisse être tourné par rapport à celui-ci.

2. Radôme comportant un élément d'application de force selon la revendication 1, **caractérisé en ce que**
concernant le radôme (1), il s'agit d'un radôme expansé (1) et **en ce que** la zone de fixation (5) est entourée par complémentarité de forme par le radôme expansé (1) et/ou
**en ce que** la zone de fixation (5) a son diamètre se rétrécissant vers le haut et/ou
**en ce que** la zone de fixation (5) est réalisée sous la forme d'une bague.

3. Radôme comportant un élément d'application de force selon la revendication 1 ou 2, **caractérisé en ce que**
la au moins une ouverture (30) dans la zone de fixation (5) de l'élément d'application de force (2) relie sous la forme d'un tunnel les deux surfaces extérieures (6₁, 6₂) de la zone de fixation (5), de sorte que le radôme (1) appliqué par complémentarité de forme à l'intérieur est entouré sur quatre côtés par la zone de fixation (5) de l'élément d'application de force (22).

4. Radôme comportant un élément d'application de force selon la revendication 2 ou 3, **caractérisé en ce que**
une largeur de la au moins une ouverture (30) dans la zone de fixation (5) de l'élément d'application de force (2) est plus grande qu'une hauteur de la au moins une ouverture (30).

5. Radôme comportant un élément d'application de force selon l'une des revendications 1 à 4, **caractérisé en ce que**
la zone de fixation (5) présente sur une ou sur les deux surfaces extérieures (6₁, 6₂) un profilé annulaire (31), où le radôme (1) s'applique par complémentarité de forme dans le profilé annulaire (31) et est assuré contre un mouvement de retrait.

6. Radôme comportant un élément d'application de force selon la revendication 5, **caractérisé en ce que**
le profilé annulaire (31) est formé par des rainures espacées les unes des autres (31) et/ou
**en ce qu'**une profondeur de chaque rainure (31) est modifiée plusieurs fois.

7. Radôme comportant un élément d'application de force selon l'une des revendications 1 à 6, **caractérisé en ce que**
une ou les deux surfaces extérieures (6₁, 6₂) de la zone de fixation (5) présente(nt) des rainures (60) et/ou des indentations (61), qui sont remplies par le radôme (1) par complémentarité de forme et qui empêchent le retrait du radôme (1) de l'élément d'application de force (2).

8. Radôme comportant un élément d'application de force selon l'une des revendications 1 à 7, **caractérisé en ce que**
une ou les deux surfaces extérieures (6₁, 6₂) de la zone de fixation (5) présente(nt) un profilé ondulé, dans lequel les ondes sur l'une ou les deux surfaces extérieures (6₁, 6₂) présentent une inclinaison positive et/ou négative, dans lequel le profilé ondulé est entouré par complémentarité de forme par le radôme (1).

9. Radôme comportant un élément d'application de force selon l'une des revendications précédentes, **caractérisé en ce que**
l'élément d'application de force (2) est réalisé d'une seule pièce avec la zone de fixation (5) et la zone de collerette (4).

10. Radôme comportant un élément d'application de force selon la revendication 9, **caractérisé en ce que**,
le côté associé à la zone de fixation (5) de la zone de collerette (4) présente un ou plusieurs évidements (7) et/ou
**en ce qu'**un ou plusieurs évidements (7) s'étendent de la zone de collerette (4) dans la zone de fixation (5).

11. Radôme comportant un élément d'application de force selon la revendication 10, **caractérisé en ce que**
concernant le ou plusieurs évidements (7), il s'agit de taraudages et/ou **en ce que** dans l'un ou plusieurs évidements (7) est formé un filetage séparé.

12. Radôme comportant un élément d'application de force selon l'une des revendications précédentes, **caractérisé en ce que**
le côté (40) associé à la zone de fixation (5) de la zone de collerette (4) est réalisé plan.

13. Radôme comportant un élément d'application de force selon l'une des revendications précédentes, **caractérisé en ce que**
la zone de fixation (5) présente une forme en V arrondi ou une forme en T arrondi ou une forme en H arrondi, ou un côté supérieur de la forme en V ou un côté inférieur de la forme en T ou de la forme en H est fixé à la zone de collerette (4).

14. Radôme comportant un élément d'application de force selon l'une des revendications précédentes, **caractérisé en ce que**
le radôme (1) est constitué en polyuréthane et **en ce que** l'élément d'application de force (2) est constitué en métal, en particulier en aluminium ou en inox, ou en plastique.
